# EUROPÄISCHE PATENTSCHRIFT

(11) **EP 3 156 000 B1**
(45) Veröffentlichungstag und Bekanntmachung des Hinweises auf die Patenterteilung: **31.01.2024**
(21) Anmeldenummer: 16199341.5
(22) Anmeldetag: 13.01.2011
(51) Int. Cl.: A61C 8/00

(54) **ZAHNIMPLANTAT, ABUTMENT FÜR EIN ZAHNIMPLANTAT UND KOMBINATION DAVON SOWIE EIN IMPLANTATIONS-SET**
DENTAL IMPLANT, ABUTMENT FOR A DENTAL IMPLANT AND COMBINATION OF SAME AND AN IMPLANTATION SET
IMPLANT DENTAIRE, PILIER POUR IMPLANT DENTAIRE ET LEUR COMBINAISON ET ENSEMBLE D'IMPLANTS

(30) Priorität: 21.01.2010 EP 10151292
(43) Veröffentlichungstag der Anmeldung: 19.04.2017
(62) Teilanmeldung aus: 11700179.2
(73) Patentinhaber: Camlog Biotechnologies GmbH, 4053 Basel (CH)
(72) Erfinder: Sollberger, David, 8152 Galttpark (CH); Solèr, Christoph, 4222 Zwingen (CH); Schär, Alex, 4125 Riehen (CH)
(74) Vertreter: Hepp Wenger Ryffel AG

(56) Entgegenhaltungen:
- EP-A1- 1 728 486
- WO-A1-96/29020
- WO-A1-97/20518
- WO-A1-03/020154
- DE-A1- 10 315 399
- US-A1- 2005 287 497
- US-A1- 2008 131 840

## Beschreibung

Die Erfindung betrifft ein Zahnimplantat, ein Abutment für ein Zahnimplantat, eine Kombination aus einem solchen Implantat und Abutment sowie ein Implantations-Set mit den Merkmalen des Oberbegriffs der unabhängigen Patentansprüche.

Zahnimplantate und dazu gehörige Abutments sind in einer Vielzahl von verschiedenen Ausführungen bekannt. Das Zahnimplantat ist typischerweise durch einen im Wesentlichen zylinderförmigen Körper gebildet. Der Körper weist an seinem koronalen Ende eine Aufnahmeöffnung auf, in die ein so genanntes Abutment einsetzbar ist. Unter koronal wird hier und im Folgenden die Richtung bezeichnet, die gegen die Krone bzw. den aufzusetzenden Zahn gerichtet ist. In diesem Zusammenhang wird mit zervikal die Richtung bezeichnet, die gegen die Zahnwurzel hin gerichtet ist.

Das in die Aufnahmeöffnung einsetzbare Abutment dient in an sich bekannter Art und Weise zur direkten oder indirekten Aufnahme eines Zahnersatzes. Es ist bereits bekannt, die Aufnahmeöffnung im Implantat und eine entsprechende Gegenfläche konisch auszubilden. Auf diese Weise wird angestrebt, eine möglichst gute mechanische Verbindung sowie Dichtwirkung zwischen Abutment und Implantat zu erzielen, sodass kein Spalt entsteht, in dem sich Flüssigkeiten bzw. Bakterien festsetzen können. Solche konische Anordnungen sind aber mit verschiedenen Nachteilen behaftet. Beispielsweise entsteht bei der späteren Abformung eine Höhenverschiebung aufgrund von Toleranzen im Winkel und Durchmesser des Konus. Gleichzeitig ist aufgrund des Konus der Aussendurchmesser des Abutments im unteren Bereich kleiner als bei vergleichbaren Abutments oder Implantaten mit nicht konischen Abschnitten. Typischerweise befindet sich in diesem Bereich ein Indexierungsbereich zur Rotationssicherung oder Rotationspositionierung zwischen Abutment und Implantat. Solche Indexierungsbereiche bilden typischerweise in Umfangsrichtung einen Formschluss mit einer unrunden Kontur, z.B. durch einen Mehrkant oder durch Nuten und Nocken. Aufgrund der dünneren Wandstärke sind die Möglichkeiten bei der Gestaltung des Indexierungsbereichs reduziert. Insbesondere können sich auch Festigkeitsprobleme ergeben. Vor allem wenn der Indexierungsbereich im Implantat auch zum Kontakt mit einem Eindrehwerkzeug dient, um das Implantat einzudrehen, kann dies zu Problemen führen.

Abutments und Implantate mit entsprechenden konischen Abschnitten sind beispielsweise aus AT 400 804 B, EP 1 396 236 A1, EP 1 203 567, DE 102 31 743 A1, EP 1 728 486 A1 oder aus DE 10 2005 001 792 A1 bekannt.

Die DE 103 15 399 A1 offenbart ein Dentalimplantat mit einem konischen Abschnitt, einem Indexierungsabschnitt und einem sich an den Indexierungsabschnitt anschließenden Gewindeabschnitt. Der Konus weist dabei Seitenflächen mit einer Steigung von sieben bis neun Grad auf. Nuten im Indexierungsabschnitt weisen keine gegen das untere Ende des Implantats gerichtete, abgeschrägte Böden auf.

Alle diese Lösungen sind aber mit den oben genannten sowie mit weiteren Nachteilen behaftet.

Es ist deshalb eine Aufgabe der vorliegenden Erfindung, die Nachteile des Bekannten zu vermeiden, insbesondere also ein Zahnimplantat und ein Abutment sowie ein Implantations-Set zu schaffen, welche eine zuverlässige und feste Verbindung zwischen Implantat und Abutment gewährleisten, welche das Festsetzen von Bakterien in einem Spalt zwischen Implantat und Abutment möglichst verhindern und welche eine gute Kraftübertragung zwischen einem Eindrehwerkzeug und dem Implantat beim Eindrehen des Implantates sowie eine zuverlässige Abformung der Implantatsituation im Mund erlauben.

Erfindungsgemäss werden diese und weitere Aufgaben mit einem Zahnimplantat, einem Abutment und einem Implantations-Set gemäss den Merkmalen des kennzeichnenden Teils der unabhängigen Patentansprüche gelöst.

Das erfindungsgemässe Zahnimplantat dient in bekannter Art und Weise zum Einsetzen in einen Kieferknochen. Das Implantat weist am koronalen Ende eine Aufnahmeöffnung für ein Abutment auf. Die Aufnahmeöffnung weist vom koronalen Ende her gesehen einen Konusabschnitt mit einer bestimmten Konuslänge und einen Indexierungsabschnitt mit einer bestimmten Indexierungslänge auf. Erfindungsgemäss weist der Konusabschnitt einen Gesamtkonuswinkel im Bereich zwischen 10°-18° und bevorzugt 15° auf. Im Zusammenspiel mit einem entsprechend geformten Konus am Abutment ergibt sich eine selbsthemmende Verbindung wenn das Abutment in das Implantat eingesetzt ist. Damit wird eine zusätzliche Stabilität der Verbindung erzielt. Weiter ist die Indexierungslänge mindestens 90%, bevorzugt je nach Implantatdurchmesser etwa 95% bis 125% der Konuslänge lang ausgebildet. Auf diese Weise ergibt sich trotz eines aufgrund des Konus reduzierten Aussendurchmessers am Abutment eine ausreichend grosse Stabilität in der Verbindung zwischen Abutment und Implantat. Ausserdem wird eine genügend grosse Eingriffsfläche für ein Eindrehwerkzeug zur Verfügung gestellt. Der Indexierungsabschnitt dient zur Rotationspositionierung und Rotationssicherung zwischen Abutment und Implantat und gleichzeitig auch als Eingriffsfläche für ein Einbringwerkzeug. Bevorzugt ist der Indexierungsabschnitt in Achsrichtung gesehen mindestens 1.6 mm lang. Grundsätzlich ist es denkbar, den Indexierungsabschnitt in an sich bekannter Art und Weise mit einem Mehrkant oder anderen nicht runden Konturen auszubilden. Bevorzugt ist jedoch ein Indexierungsabschnitt, der wie nachstehend beschrieben mit einer Nut-Nockenverbindung ausgebildet ist.

Der Indexierungsabschnitt weist eine Oberfläche auf, in welcher wenigstens eine sich in radialer Richtung nach Aussen erstreckende Nut mit einer bestimmten Nutlänge angeordnet ist. Die Nut ist mit einem Nocken eines Abutments in Eingriff bringbar. Dabei ist die Oberfläche wenigstens teilweise zylindrisch ausgebildet. Gleichzeitig ist sie so bemessen und toleriert, dass sie eine Führungsfläche für ein bestimmungsgemäss eingesetztes Abutment bildet.

Die Nutlänge erstreckt sich über mindestens 70% der Indexierungslänge. Auf diese Weise lässt sich der Kontakt zwischen der Eingriffsfläche der Nut und einer entsprechenden Eingriffsfläche an einem Nocken eines Eindrehwerkzeuges oder eines Abutments maximieren, sodass Eindrehkräfte oder - Momente ohne plastische Deformation übertragen werden können bzw. sodass die pro Flächeneinheit eingeleitete Kraft miniert werden kann. Diese Verformung hätte einen Einfluss auf die Genauigkeit der Abformung und Positionierung des Abutments. Der gegen das untere Ende des Implantates gerichtete Boden der Nut ist bevorzugt abgeschrägt. Der Winkel der Abschrägung entspricht insbesondere bevorzugt dem Winkel einer entsprechenden Anphasung an einen Nocken eines Abutments.

An den Indexierungsabschnitt des Implantats schließt sich unmittelbar ein Gewindeabschnitt zur Aufnahme einer Abutmentschraube an. Mit anderen Worten heisst dies, dass sich an den Formschlussabschluss im Implantat kein weiterer Bereich anschliesst, der zur Aufnahme oder Führung des Abutments dient.

Besonders bevorzugt hat die Oberfläche des Indexierungsabschnittes einen Aussendurchmesser, der grösser ist als 80% des Aussendurchmessers der Nut. Damit kann der Aussendurchmesser eines entsprechenden Indexierungsabschnitts eines Abutments so gross wie möglich ausgestaltet werden. Gleichzeitig sollte der Aussendurchmesser des Indexierungsabschnittes sich aber nicht zu sehr am Aussendurchmesser der Nut annähern, damit eine ausreichend grosse Nuttiefe gewährleistet bleibt.

Weiter bevorzugt weist die Nut eine radial verlaufende Nutfläche (bzw. beidseitig eine radial verlaufende Nutfläche) auf, welche grösser als 0,22 mm2 ausgebildet ist.

Gleichzeitig ist bevorzugt die Nutlänge grösser als 500 % der Nuttiefe. Als Nuttiefe wird die Distanz zwischen der Oberfläche des Indexierungsabschnittes und dem Nutaussendurchmesser verstanden.

Gemäss einer weiteren bevorzugten Ausführungsform ist der kleine Konusdurchmesser (d.h. der Durchmesser am zervikalen Ende des Konusabschnittes) grösser oder gleich gross als der Nutaussendurchmesser. Damit wird eine Plattform gebildet, die beim Einsetzen des Abutments eine Zwischenposition definiert.

Zwischen dem Konusabschnitt und dem Indexierungsabschnitt des Implantates ist eine umlaufende Plattformfläche gebildet. Die Nut erstreckt sich dabei in axialer Richtung bis hin zu dieser Plattformfläche. Eine solche Plattformfläche erlaubt es, eine Zwischenposition zu definieren. Ein Abutment kann in das Implantat eingesetzt werden, bis die Unterseiten der entsprechenden Nocken des Abutments auf der Plattformfläche aufliegen. Durch Drehen des Abutments in eine Position, in der die Nocken am Abutment mit den Nuten im Implantat ausgerichtet sind, kann das Abutment dann in die gewünschte Endposition gebracht werden. Der Einsetzvorgang bestehend aus den Schritten "axiales Einführen", "drehen in Umfangsrichtung" und "axiales bewegen in Endposition" ist für den Benutzer besonders intuitiv. Das Einsetzen in einer nicht gewünschten Zwischenposition wird damit verhindert.

Ein weiterer Aspekt (nicht beansprucht) betrifft ein Abutment für ein Zahnimplantat, insbesondere für das vorstehend beschriebene Implantat. Das Abutment weist eine Oberfläche zum direkten oder indirekten Aufnehmen eines Zahnersatzes auf. Das Abutment weist ausserdem einen Verbindungsbereich zur Verbindung mit dem Implantat auf. Der Verbindungsbereich ist typischerweise in die vorstehend genannte Aufnahmeöffnung des Implantates einsetzbar. Das Abutment ist mittels einer Abutmentschraube in an sich bekannter Art und Weise im Implantat fixierbar. Der Verbindungsbereich des Abutments weist einen Konusabschnitt mit einer bestimmten Konuslänge auf. An den Verbindungsbereich schliesst sich in zervikaler Richtung ein Indexierungsbereich mit einer bestimmten Indexierungslänge an. Der Konusabschnitt des Abutments weist einen Gesamtkonuswinkel von 6°-20°, bevorzugt 10°-18° und besonders bevorzugt 15° Grad auf. Die Indexierungslänge des Abutments beträgt mindestens 90%, bevorzugt 95% bis 125% der Konuslänge des Abutments. Im Zusammenspiel mit den wie vorstehend beschriebenen Abutments ergeben sich damit besonders stabile Verbindungen. Bevorzugt beträgt dabei die Indexierungslänge mindestens 1.6 mm. Der Indexierungsabschnitt wird gegen das zervikale Ende hin durch das Ende der Formschlusselemente begrenzt. Gegen das koronale Ende hin wird der Indexierungsabschnitt durch das Ende eines im Wesentlichen zylindrischen Abschnittes begrenzt, auf oder in dem die Formschlusselemente angebracht sind. Bevorzugt weist das Abutment im Indexierungsabschnitt eine Oberfläche auf, von der sich radial nach Aussen wenigstens ein Nocken erstreckt. Der Nocken ist mit den entsprechenden Nuten eines Implantates in Eingriff bringbar. Besonders bevorzugt ist diese Oberfläche des Abutments wenigstens teilweise zylindrisch ausgebildet. Sie ist ausserdem so bemessen und toleriert, dass sie eine Führungsfläche für eine Oberfläche des Indexierungsabschnittes eines Implantates bildet, wenn das Abutment bestimmungsgemäss in das Implantat eingesetzt wird. Das Abutment kann dadurch kürzer ausgebildet werden als beispielsweise das in EP 1 728 486 gezeigte Abutment, da auf einen zervikalen weiteren Führungsabschnitt verzichtet werden kann. Ausserdem kann der Führungsabschnitt mit verhältnismässig grossem Durchmesser ausgebildet werden, was die Sensitivität auf Herstellungstoleranzen mindert. Schliesslich ist mit einem derart ausgebildeten Führungsabschnitt sichergestellt, dass das Abutment beim Einsetzen zu einem sehr frühen Zeitpunkt im Implantat geführt ist.

Typischerweise wird die entsprechende Führungsfläche am Abutment und die Führungsfläche am Implantat bei einem Durchmesser von ca. 2 bis 3mm mit einer solchen Toleranz gefertigt, dass das maximale Spiel zwischen den Oberflächen weniger als 0.06 mm beträgt.

Die Nocken erstrecken sich bevorzugt im Wesentlichen über den ganzen Bereich des Indexierungsabschnittes. Als im Wesentlichen der ganze Indexierungsbereich wird eine Länge von mindestens 70 % verstanden. Auf diese Weise wird die Kontaktfläche zwischen den Nuten und den Nocken maximiert, wodurch sich eine bessere Kraftverteilung und eine stabilere Verbindung ergibt. Die Nocken am Abutment können aber auch etwas länger, typischerweise mindestens 75% des Indexierungsbereichs ausgebildet sein. Die zylindrische Fläche zwischen den Nocken kann an ihrem oberen Ende, d. h. gegen den Konusabschnitt hin, eine Endfläche aufweisen, welche bezogen auf eine Ebene senkrecht zur Achse abgeschrägt ist. Die Abschrägung beträgt bevorzugt 40° bis 50°, insbesondere etwa 45°. Ausserdem bevorzugt schliesst sich in Richtung des Konusabschnitts an diese Abschlussfläche eine umlaufende zylindrische Fläche an. Der Aussendurchmesser dieser zylindrischen Fläche entspricht insbesondere dem Aussendurchmesser des Nockens auf dem Abutment, so dass sich umlaufend eine Fläche mit konstantem Zylinderradius ergibt.

Gemäss einer weiteren bevorzugten Ausführungsform weist das Abutment in zervikaler Richtung anschliessend an den Indexierungsabschnitt am zervikalen Ende eine Stirnfläche mit einer Öffnung auf. Durch diese Öffnung ist ein Gewindeabschnitt einer Abutmentschraube durchführbar. Mit anderen Worten bedeutet dies, dass der Indexierungsabschnitt in zervikaler Richtung das letzte Element des Abutments bildet (mit Ausnahme der nicht mit dem Abutmentkörper einstückig ausgebildeten Abutmentschraube). Insbesondere sind zervikal an den Indexierungsabschnitt anschliessend keine weiteren Führungsabschnitte oder Führungselemente vorgesehen.

Weiter bevorzugt ist der Aussendurchmesser der Oberfläche des Indexierungsabschnittes des Abutments grösser als 80% des Nockenaussendurchmessers. Dadurch wird sichergestellt, dass die Oberfläche des Indexierungsabschnittes, welche wie vorstehend beschrieben gleichzeitig eine Führungsfläche bildet, möglichst gross ausgebildet sein kann. Zusätzlich haben gleiche Fertigungstoleranzen bei grösseren Dimensionen weniger Einfluss auf das Spiel.

Der Nocken weist weiter bevorzugt eine radial verlaufende Nockenfläche auf, die grösser als 0.22 mm2 ist. Die Nockenlänge ist dabei bevorzugt wenigstens 500 % grösser als die Nockentiefe. Unter Nockentiefe wird der Abstand zwischen Nockenaussendurchmesser und Oberfläche des Indexierungsabschnittes des Abutments verstanden. Indem die Nocken mit einer ausreichend grossen Länge ausgebildet werden, kann die Nockenfläche, welche eine Kontaktfläche für Nuten des Implantates bildet trotz der geringen Nockentiefen, ausreichend gross gewählt werden, um das Eindrehmoment beim Inserieren der Implantate zu übertragen.

Weiter bevorzugt ist der Durchmesser des Konus an seinem zervikalen Ende grösser oder gleich gross als der Durchmesser der Nocken.

Ausserdem weist der Nocken an seinem zervikalen Ende bevorzugt einen Kantenbruch auf. Durch einen solchen Kantenbruch wird das Einführen der Nocken in die Nuten des Implantats erleichtert. Der Kantenbruch bildet eine Einführhilfe.

Weiter bevorzugt weist das Abutment ein Emergenzprofil mit einer bestimmten Formgebung auf: An den Konusabschnitt des Abutments, welcher aus dem Implantat austritt, schliesst sich ein kurzer zylindrischer Abschnitt und dann ein in einer Schnittebene durch die Achse des Abutments gesehen konkaver und anschliessend ein konvexer Bereich an, welcher der natürlichen Zahnform nachempfunden ist.

Weiter bevorzugt ist die Oberfläche des Indexierungsabschnittes des Abutments nicht vollständig zylindrisch ausgebildet. Bevorzugt befinden sich zwischen den Nockenflächen des Nockens und der als Führungsfläche dienenden Oberfläche Hinterschnitte. Mit solchen Hinterschnitten ist eine besonders präzise Herstellung des Indexierungsabschnitts resp. der Führungsoberfläche am Abutment möglich.

Das mit einer axialen Bohrung versehene Abutment kann im Bereich der Bohrung mit einem zusätzlichen Gewinde versehen sein. Das Gewinde dient zur Aufnahme eines Demontage-Tools. Weil der Konuswinkel so gewählt ist, dass sich bei eingesetztem Abutment eine Selbsthemmung zwischen der Konusflächen des Abutments und des Implantates ergibt, ist es unter Umständen möglich, dass das Abutment nicht ohne weiteres entfernt werden kann. Dank diesem Gewinde kann zum Entkoppeln des Abutments ein Demontage-Tool im Abutment befestigt werden.

Noch ein weiterer Aspekt der Erfindung betrifft eine Kombination aus einem wie vorstehend beschriebenen Implantat und einem wie vorstehend beschriebenen Abutment. Die Indexierungsabschnitte von Implantat und Abutment und die Konusabschnitte von Implantat und Abutment sind dabei so bemessen und geformt, dass bei in das Implantat eingesetztem Abutment die Konusabschnitte sich wenigstens teilweise gegenseitig berühren und dass die Indexierungsabschnitte im gegenseitigen Eingriff stehen. Die Flächen, über die die Konusabschnitte in Kontakt stehen, werden dabei soweit möglich im Rahmen der Toleranzen maximiert.

Besonders bevorzugt sind die Konusabschnitte an Abutment und Implantat so toleriert, dass bei jeder denkbaren Paarung zwischen Implantat und das dazu gehörige Abutment im Rahmen der Toleranzen ein Kontakt zwischen den Konusabschnitten am koronalen Rand des Konusabschnittes des Implantates erfolgt. Ein in der Realität nie auszuschliessender Spalt zwischen Abutment und Implantat aufgrund von Toleranzen im Konuswinkel wird sich dann in jedem Fall nicht am koronalen Rand sondern nach innen versetzt ausbilden. Damit wird verhindert, dass sich Flüssigkeiten in einem entsprechenden Spalt festsetzen.

Aufgrund des Kontaktes zwischen den Konusabschnitten im Bereich des koronalen Randes wird ausserdem eine besonders stabile Befestigung des Abutments im Implantat erzielt. Es besteht gewissermassen eine zwei Punkt Abstützung einerseits am oberen koronalen Rand und andererseits im Bereich der Führungsflächen zwischen den Nuten bzw. den Nocken.

Weiter bevorzugt sind die Oberflächen der Indexierungsabschnitte zwischen den Nocken des Abutments einerseits und zwischen den Nuten des Implantates andererseits so bemessen, dass das Abutment durch Kontakt zwischen den Oberflächen der Indexierungsabschnitte im Implantat geführt ist. Typischerweise sind die Oberflächen wie folgt bemessen, dass bei Führungsflächen mit einem Durchmesser von 2 bis 3mm, typischerweise 2.1mm, das maximale Spiel zwischen den Führungsflächen 0.06mm beträgt.

Gemäss noch einer weiteren bevorzugten Ausführungsform weist das Abutment eine Abutmentschraube auf, deren Länge und insbesondere deren Anordnung des Gewindes so bemessen ist, dass die Abutmentschraube nicht in Eingriff mit einem Gewindeabschnitt im Implantat gelangen kann, solange das Abutment mit der Stirnfläche seiner Nocken am zervikalen Ende auf der Plattform des Implantates aufliegt. Auf diese Weise wird verhindert, dass versehentlich das Abutment durch Festziehen einer Abutmentschraube im Implantat befestigt wird, bevor das Abutment die korrekte Position erreicht hat.

Noch ein weiterer Aspekt der Erfindung betrifft ein Implantations-Set gemäß Anspruch 7. Das Implantations-Set weist wenigstens ein Implantat und wenigstens ein Abutment auf. Das Implantat ist an seinem koronalen Ende mit einer Aufnahmeöffnung für das Abutment ausgebildet. Die Aufnahmeöffnung weist benachbart zum koronalen Ende einen Implantatkonusabschnitt auf. Bevorzugt ist das Implantat und das Abutment wie vorstehend ausgeführt ausgebildet. Das Abutment ist in die Aufnahmeöffnung des Implantates einsetzbar und weist einen Abutmentkonusabschnitt auf, der mit dem Implantatkonusabschnitt in Eingriff bringbar ist.

Das Implantations-Set weist ausserdem wenigstens ein Hilfselement auf. Für verschiedene Aufgaben im Zusammenhang mit der Implantation werden Hilfselemente wie typischerweise Verschlussschrauben, Gingiva-Former, Provisoriumsabutments oder Abformelemente eingesetzt. Solche Elemente sind an sich dem Fachmann bekannt. Erfindungsgemäss ist das Hilfselement so ausgebildet, dass es, wenn es in das Implantat eingesetzt ist, die Implantatkonusfläche nicht berührt und mit einer Kontaktfläche auf einem Stirnrand des Implantates aufliegt. Mit dieser Ausgestaltung der Hilfselemente werden verschiedene Vorteile erzielt: Einerseits bleibt die Konusfläche des Implantates im Wesentlichen durch die Hilfselemente unbeeinträchtigt. Eine Beschädigung der Konusfläche durch die Hilfselemente ist daher weitgehend ausgeschlossen. Anderseits lassen sich die Hilfsteile leichter entkoppeln, weil es keine Selbsthemmung zwischen den Konusflächen gibt. Gleichzeitig werden Höhenverschiebungen beim Abformen zuverlässig vermieden, da nicht die Konusfläche sondern die Stirnseite des Implantates die vertikale Position des Abformelementes definiert.

Besonders bevorzugt weist das Hilfselement im Bereich der Kontaktfläche einen Aussendurchmesser auf, der grösser als der Aussendurchmesser des Abutments in diesem Bereich ist. Auf diese Weise kann vor allem bei einem Gingiva-Former, einer Verschlussschraube oder einem Provisoriumsabutment der Knochen und oder das Zahnfleisch soweit ausgeformt werden, dass das Einsetzen des definitiven Abutments nicht beeinträchtigt wird.

Bei einem als Gingiva-Former ausgebildeten Hilfselement ist ausserdem der Aussendurchmesser im Bereich der Kontaktfläche grösser als der entsprechende Aussendurchmesser eines als Abformelement ausgebildeten Hilfselementes. Dabei wird vermieden, dass das Zahnfleisch bei der Abformung einen störenden Einfluss hat.

Weitere Aspekte betreffen ein:
Abutment für ein Zahnimplantat, mit einer Oberfläche zur direkten oder indirekten Aufnahme eines Zahnersatzes und mit einem Verbindungsbereich zur Verbindung mit dem Implantat, wobei der Verbindungsbereich einen Konusabschnitt mit einer Konuslänge aufweist, an dem sich in zervikaler Richtung ein Indexierungsabschnitt mit einer Indexierungslänge anschliesst, wobei der Konusabschnitt einen Gesamtkonuswinkel von 6 bis 20°, bevorzugt 10° bis 18°, besonders bevorzugt 15° aufweist und dass die Indexierungslänge mindestens 70 % der Konuslänge beträgt, insbesondere mehr als 1.6mm beträgt.

Abutment, wobei das Abutment im Indexierungsabschnitt eine Oberfläche aufweist, von der sich radial nach aussen wenigstens ein Nocken mit einer Nockenlänge erstreckt, der mit entsprechenden Nuten eines Implantats in Eingriff bringbar ist.

Abutment, wobei die Oberfläche wenigstens teilweise zylindrisch ausgebildet ist und so bemessen und toleriert ist, dass sie eine Führungsfläche für eine Oberfläche eines Indexierungsabschnittes des Implantates bildet, wenn das Abutment bestimmungsgemäss in das Implantat eingesetzt ist.

Abutment, wobei die Nockenlänge sich im Wesentlichen über die gesamte Indexierungslänge erstreckt.

Abutment, wobei das Abutment in zervikaler Richtung anschliessend an den Indexierungsabschnitt am zervikalen Ende eine Stirnfläche mit einer Öffnung aufweist, durch welche ein Gewindeabschnitt einer Abutmentschraube führbar ist.

Abutment, wobei die Oberfläche des Indexierungsabschnittes einen Aussendurchmesser aufweist, der grösser oder gleich als 80% des Nockenaussendurchmessers ist.

Abutment, wobei der Nocken eine im Wesentlichen radial verlaufende Nockenfläche aufweist, die grösser ist als 0.22mm2.

Abutment, wobei die Nockenlänge grösser als 500 % der Nockentiefe ist.

Abutment, wobei der Nocken einen Aussendurchmesser aufweist, der kleiner ist oder gleich, als der kleinste Durchmesser des Konusabschnittes.

Abutment, wobei der Nocken an seinem zervikalen Ende einen Kantenbruch aufweist.

Kombination aus einem Implantat wie vorliegend beschrieben und einem Abutment wie vorliegend beschrieben, wobei die Indexierungsabschnitte und die Konusabschnitte des Implantates und des Abutments derart bemessen und geformt sind, dass sich bei eingesetztem Abutment die Konusabschnitte gegenseitig wenigstens teilweise berühren und die Indexierungsabschnitte im gegenseitigem Eingriff stehen.

Kombination wie vorliegend beschrieben, wobei die Konusabschnitte derart toleriert sind, dass bei jeder Paarung zwischen einem Implantat und einem dazu gehörigen Abutment ein Kontakt zwischen den Konusabschnitten benachbart zum koronalen Stirnrand des Implantats erfolgt.

Kombination wie vorliegend beschrieben, wobei die Oberfläche der Indexierungsabschnitte zwischen den Nocken des Abutments und zwischen den Nuten des Implantats so bemessen sind, dass das Abutment durch die Oberflächen an der Oberfläche des Implantats geführt ist.

Kombination wie vorliegend beschrieben, mit einer Abutmentschraube, wobei die Länge der Abutmentschraube so bemessen ist, dass die Abutmentschraube nicht in Eingriff mit einem Gewindeabschnitt des Implantats bringbar ist, wenn das Abutment mit einer Stirnfläche der Nocken auf der Plattformfläche des Implantats in einer Zwischenposition aufliegt.

Die Erfindung wird im Folgenden anhand der Zeichnungen und in Ausführungsbeispielen näher erläutert. Es zeigen:
- Figur 1: Seitenansicht eines erfindungsgemässen Implantats
- Figur 2: Schnitt durch das Implantat gemäss Figur 1 entlang einer Mittenlängs-Achse
- Figuren 3a und 3b: vergrösserte Darstellungen des Implantats aus Figur 1 im Bereich einer Aufnahmeöffnung im Schnitt
- Figur 4a: perspektivische Darstellung eines erfindungsgemässen Abutments
- Figur 4b: vergrösserte Darstellung des Abutments aus Figur 4a in einem Verbindungsbereich
- Figur 5: Schnitt durch das Abutment gemäss Figur 4a entlang einer Mittenlängs-Achse
- Figur 6: Schnitt durch ein erfindungsgemässes Implantat und ein erfindungsgemässes Abutment in einem Indexierungsbereich entlang einer Ebene senkrecht zur Achse
- Figur 7: Schnitt durch ein erfindungsgemässes Abutment und ein erfindungsgemässes Implantat entlang einer Mittenlängs-Ebene
- Figur 8: vergrösserte Darstellung eines erfindungsgemässen Abutments in einem erfindungsgemässen Implantat im Schnitt entlang einer Mittenlängs-Ebene in einem Verbindungsbereich
- Figur 9: Schnitt durch ein erfindungsgemässes Implantat mit einem Gingiva-Former entlang einer Mittenlängs-Ebene
- Figur 10: Schnitt durch ein erfindungsgemässes Implantat mit einem Abformelement entlang einer Mittenlängs-Ebene,
- Figur 11: vergrösserte Darstellung des Abformelements und des Implantates aus Figur 10 im Bereich des Konusabschnittes des Implantates und
- Figur 12: Schnitt durch ein erfindungsgemässes Implantat mit einem Provisoriumsabutment entlang einer Mittenlängs-Ebene.

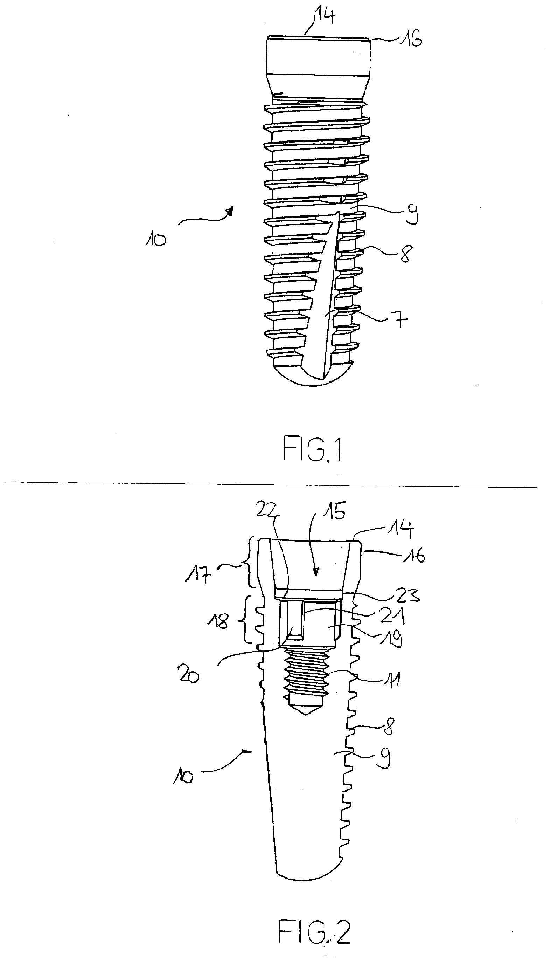

Figur 1 zeigt ein Implantat 10. Das Implantat 10 weist einen Grundkörper 9 mit einem Gewinde 8 und einer Schneidekante 7 in an sich bekannter Art und Weise auf. Das Implantat 10 wird mit dem Grundkörper 9 in einen Kiefer eines Patienten eingesetzt, sodass ein koronales Ende 16 des Implantates 10 mit einem Stirnrand 14 je nach Situation leicht aus dem Knochen vorsteht oder leicht tiefer steht.

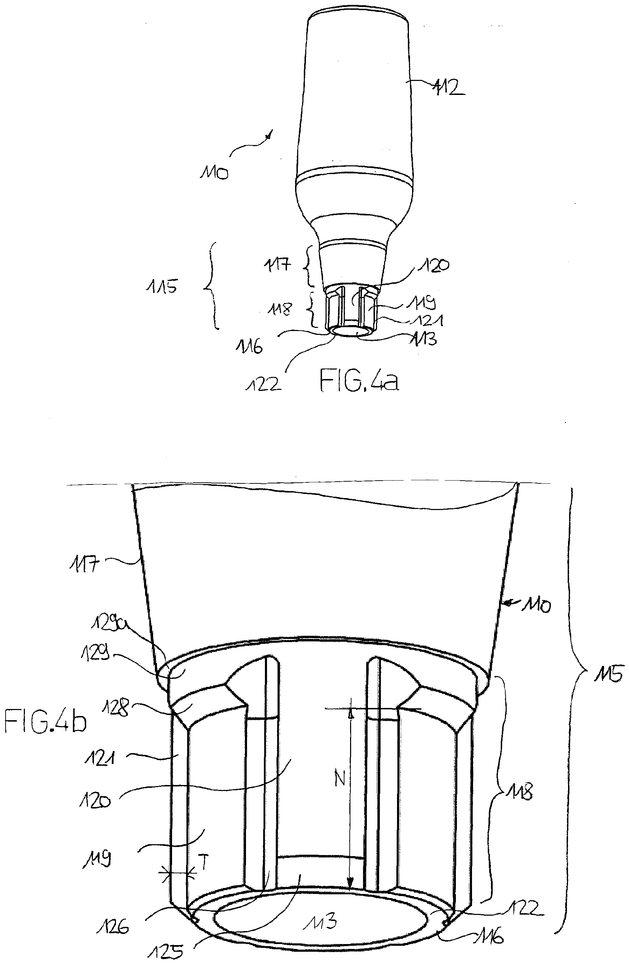

Figur 2 zeigt einen Schnitt durch eine Mittenachse des Implantates gemäss Figur 1. Benachbart zum koronalen Ende 16 weist das Implantat 10 eine Aufnahmeöffnung 15 zur Aufnahme eines Abutments (siehe Figur 4a) auf. Die Aufnahmeöffnung 15 weist direkt anschliessend an das koronale Ende 16 einen Konusabschnitt 17 auf. Direkt an den Konusabschnitt 17 schliesst sich ein kurzer zylindrischer Abschnitt 23 an. An den zylindrischen Abschnitt 23 schliesst sich ein Indexierungsabschnitt 18 an. Der Indexierungsabschnitt 18 ist durch eine im Wesentlichen zylindrische Oberfläche 19 gebildet, in welche drei gleichmässig über den Umfang verteilt angeordnete Nuten 20 eingebracht sind. Die Nuten 20 erstrecken sich von der Oberfläche 19 radial nach aussen. Die Nuten weisen seitliche Nutflächen 21 auf, welche in Eingriff mit entsprechenden Nockenflächen eines Abutments (siehe Figur 4a) oder eines Eindrehinstruments oder weiterer Hilfselemente gelangen können und so eine Rotationssicherung bilden und die Übertragung der Eindrehmomente ermöglichen.

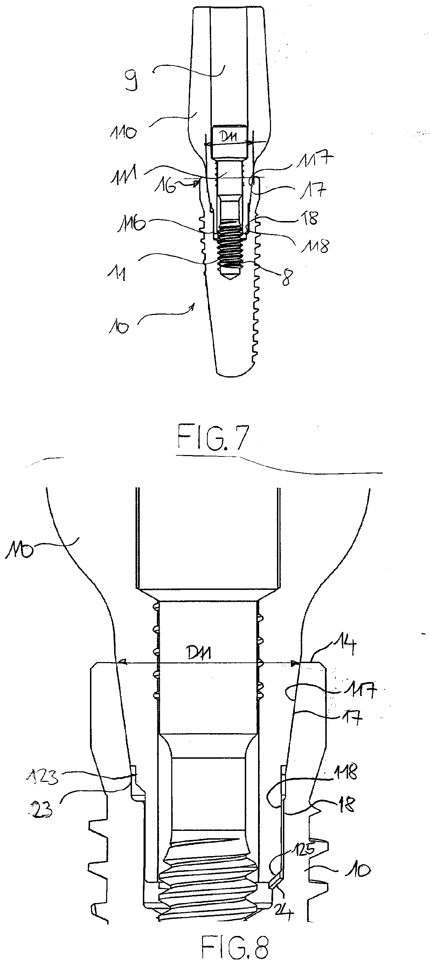

Zwischen dem zylindrischen Abschnitt 23 und dem Indexierungsabschnitt 18 ist eine Plattform 22 gebildet. Auf dieser Plattformfläche 22 steht das Abutment (siehe Figur 4a) mit der zervikalen Unterseite seiner Nocken auf, wenn die Nocken des Abutments nicht genau mit den Nuten 20 des Implantats 10 fluchten. Dadurch wird eine Zwischenposition definiert. Durch Drehen des Abutments bezogen auf das Implantat 10 können die Nocken und die Nuten 20 ausgerichtet werden, sodass das Abutment axial in eine Endlage bewegt werden kann. Das Implantat 10 weist ausserdem einen Gewindeabschnitt 11 auf. Das Abutment kann mittels einer Abutmentschraube (siehe auch Figur 7) im Implantat 10 befestigt werden. Die Abutmentschraube ist dabei bezogen auf den Gewindeabschnitt 11 des Implantates 10 so ausgebildet, dass die Abutmentschraube mit dem Gewindeabschnitt 11 nicht in Eingriff gelangt, wenn das Abutment in der Zwischenposition auf der Plattformfläche 22 aufsteht.

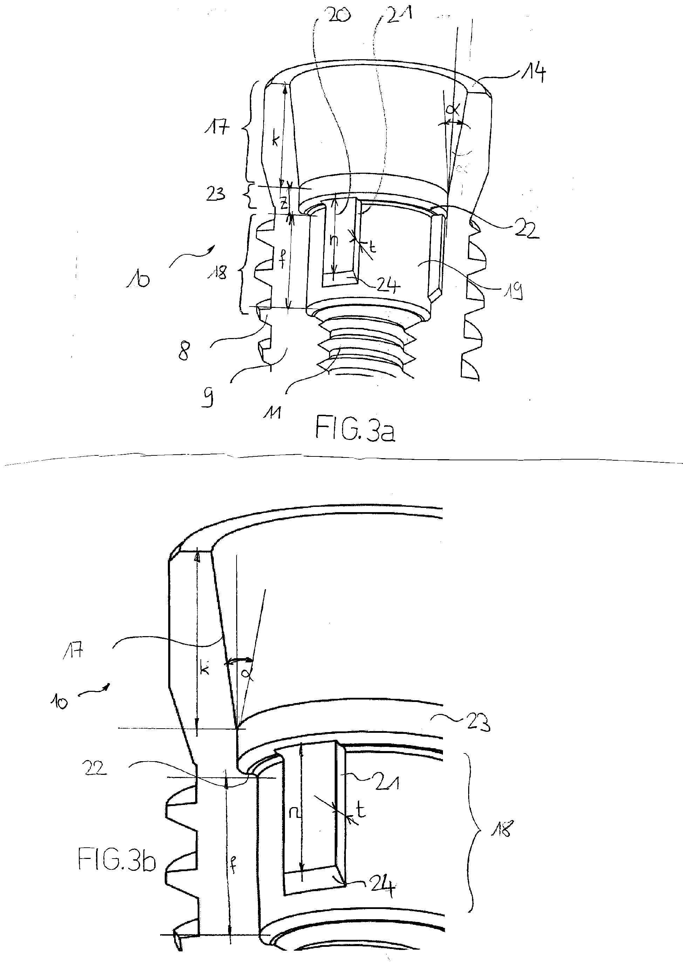

Figuren 3a und 3b zeigen vergrösserte Darstellungen des Implantates 10 im Bereich des Konusabschnittes 17 und des Indexierungsabschnittes 18 im Schnitt. Gleiche Bezugszeichen bezeichnen gleiche Teile wie in Figur 1 und 2. Der Konusabschnitt 17 verläuft unter einem Gesamtkonuswinkel α von ungefähr 15° Grad

Im Nachfolgenden werden typische Dimensionen eines Implantats und eines zugehörigen Abutments mit einem Implantatdurchmesser von 3.8mm wieder gegeben. Der Konusabschnitt 17 weist eine Konuslänge k von 1.9 mm auf. Die Länge z des zylindrischen Abschnitts 23 beträgt 0.4mm.

Der Indexierungsabschnitt 18 ist im Vergleich zum Konusabschnitt 17 verhältnismässig lang in axialer Richtung ausgebildet. Die Indexierungslänge f beträgt 1.8mm.

Die in den Indexierungsabschnitt 18 eingebrachten Nuten 20 weisen eine Nuttiefe t von mind. 0.18mm und in axialer Richtung eine Nutlänge n von mind. 1.35 mm auf. Die Nut 20 erstreckt sich daher in axialer Richtung über mindestens 75% der Indexierungslänge f. Die Indexierungslänge f ist mit 1.8mm fast gleich lang wie die Konuslänge k ausgebildet. Aufgrund dieser speziellen Wahl von verhältnismässig langen Nuten wird die Nutfläche 21 verhältnismässig gross ausgebildet auch wenn die Nuttiefe t gering ist. Verformungen der Nutfläche 21 beispielsweise aufgrund eines Kontakts mit einem Eindrehwerkzeug werden dadurch vermieden.

Am in Figur 3b) gezeigten unteren Boden 24 der Nut 20 ist eine Abschrägung vorgesehen. Die Nuttiefe n ist aufgrund der Abschrägung am Boden 24 radial aussen etwas geringer als am radial inneren Rand der Nut. Die Abschrägung der Nut (siehe auch Figur 8) entspricht etwa der Abschrägung am unteren Rand des Nocken (Anphasung 125) des Implantats.

Figur 4a zeigt ein erfindungsgemässes Abutment 110 in perspektivischer Darstellung. Das Abutment 110 weist eine Oberfläche 112 auf, die zur direkten oder indirekten Aufnahme eines künstlichen Zahns dient. Es ist auch denkbar, die Oberfläche 112 zu diesem Zweck noch zu bearbeiten, insbesondere zu beschleifen. Das Abutment 110 weist einen Verbindungsbereich 115 auf, mit welchem es in den Aufnahmebereich 15 des Implantates 10 (siehe Figur 2) einsetzbar ist. Der Verbindungsbereich 115 weist einen Konusabschnitt 117 auf, an den sich gegen das zervikale Ende 116 des Abutments 110 ein Indexierungsabschnitt 118 anschliesst. Der Indexierungsabschnitt 118 besteht aus einer im Wesentlichen zylindrisch ausgebildeten Oberfläche 119, von welcher sich radial nach aussen drei gleichmässig über den Umfang verteilte Nocken 120 anschliessen. Die Nocken 120 definieren seitliche Nockenflächen 121, welche mit den Nutflächen 21 des Implantats (siehe Figuren 3a und 3b) in Eingriff bringbar sind.

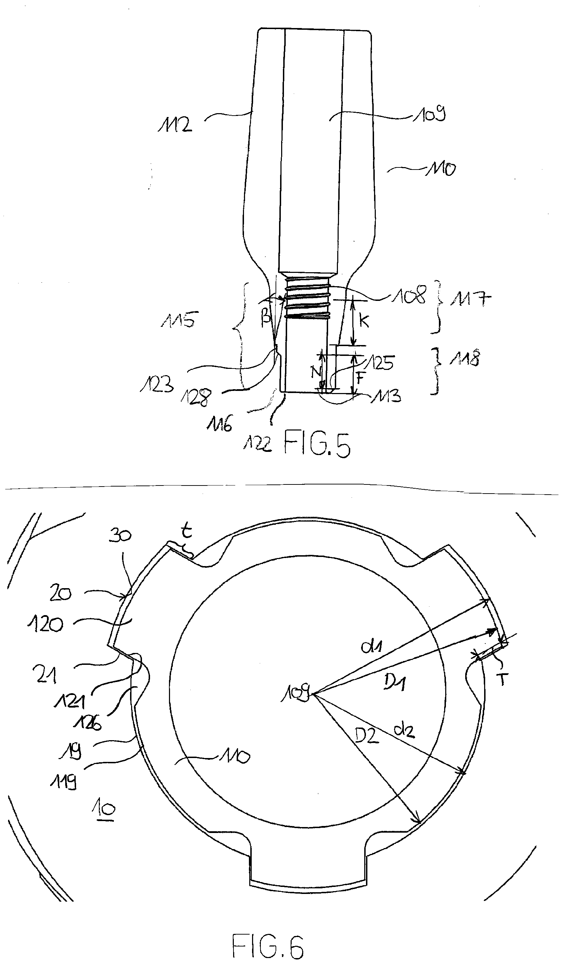

Am zervikalen Ende 116 weist das Abutment 110 in seiner Stirnfläche 122 eine Öffnung 113 auf welche das Ende einer durchgehenden Bohrung 109 (siehe Figur 5) bildet. Durch die Öffnung 113, ist eine Abutmentschraube (siehe Figur 7) durchführbar.

Figur 4b zeigt eine vergrösserte Darstellung des Indexierungsabschnitts 118 des Abutments 110. Die Nocken 120 weisen in axialer Richtung eine Nockenlänge N von 1.55mm auf. Gegen das zervikale Ende 116 des Abutments 110 weisen die Nocken 120 einen Kantenbruch 125 auf. Zwischen der Nocken 120 und der Oberfläche 119 ist ein Hinterschnitt 126 in die Oberfläche 119 eingebracht. Der Hinterschnitt 126 ist hauptsächlich herstelltechnisch begründet und erlaubt eine besonders präzise Fertigung der Oberfläche 119, sodass diese ausreichend genau gefertigt werden kann, um als Führungsfläche zu dienen. Die Nocken 120 weisen eine Nockentiefe T von 0.15mm auf.

Die zylindrische Oberfläche 119 zwischen den Nocken 120 erstreckt sich vom unteren Ende des Abutments 110 über den Indexierungsabschnitt 118, allerdings nicht über dessen ganze Höhe. In axialer Richtung gesehen wird der zylindrische Abschnitt 119 gegen den Konusabschnitt 117 hin durch eine Endfläche 128 abgeschlossen. Die Endfläche 128 ist bezogen auf eine Senkrechtebene zur Achse leicht abgeschrägt (siehe auch Figur 5). Weiter gegen den Konusabschnitt 117 gerichtet weist das Abutment 110 eine umlaufende zylindrische Fläche 129 auf. Über eine senkrecht zur Achse verlaufende Ringfläche 129a geht der zylindrische Abschnitt 129 in den Konusabschnitt 117 über.

Figur 5 zeigt einen Schnitt durch das Abutment 110 von Figuren 4a und 4b entlang der Mittenlängs-Achse. Das Abutment 110 weist eine in Achsrichtung verlaufende Bohrung 109 auf. Die Bohrung 109 ist mit einem Innengewinde 108 versehen, welches zur Aufnahme eines Demontage-Werkzeuges dient.

Der Konusabschnitt 117 weist einen Gesamtkonuswinkel β von 15° Grad auf. Der Konusabschnitt 117 weist eine Konuslänge K von 1.9mm auf. Der Indexierungsabschnitt 118 weist eine Indexierungslänge F von 1.95mm auf. Die Nocken weisen eine Nockenlänge N von 1.55mm auf, die im Wesentlichen der Länge des Indexierungsabschnittes 118 entspricht. Zwischen dem Konusabschnitt 117 und dem Indexierungsabschnitt 118 ist ein kurzer zylindrischer Abschnitt 123 angeordnet, der herstelltechnisch bedingt ist und keine weitere Funktion erfüllt.

Figur 6 zeigt einen Schnitt durch ein in ein Implantat 10 eingesetzten Abutments 110 entlang einer Ebene senkrecht zur Achse.

Die Nocken 120 stehen mit den Nuten 20 im Eingriff, sodass die Nockenflächen 121 die Nutflächen 21 kontaktieren. Der Aussendurchmesser D2 der Oberfläche 119 des Abutments 110 ist im Wesentlichen gleich dimensioniert wie der Innendurchmesser d2 der Kontaktfläche 19 des Implantates 10. Dadurch ist die Oberfläche 119 des Abutments zwischen den Nocken 120 an der Oberfläche 19 des Implantates 10 zwischen den Nuten 20 geführt. Die Durchmesser D2 und d2 betragen beide 2.1 mm und sind so toleriert, dass das maximale Spiel zwischen den Führungsoberflächen nicht mehr als 0.06mm beträgt. Ausserdem ist das Mindestspiel so gewählt, dass das Abutment in den Aufnahmeöffnung des Implantates einführbar ist.

Der Aussendurchmesser D1 der Nocken bzw. der Aussendurchmesser d1 der Nuten ist ebenfalls im Wesentlichen ähnlich ausgebildet. Hier ist allerdings eine Führungsfunktion nicht zwingend, sodass sich ein Spalt 30 einstellen kann. Die Durchmesser D1 und d1 betragen typischerweise 2.4mm bzw. 2.45mm. Die Nockentiefe T bzw. die Nuttiefe t ergibt sich aus der Differenz zwischen den Durchmessern D1 und D2 bzw. d1 und d2. Zwischen der Oberfläche 119 und der Nut 120 des Abutments 110 ist ausserdem ein Hinterschnitt 126 eingebracht. Der Hinterschnitt 126 wird zur Definition der Nockentiefe T nicht berücksichtigt.

Die Nocken 120 bzw. Nuten 20 weisen in Umfangsrichtung gesehen bei einem Aussendurchmesser der Oberfläche 119 des Abutments bzw. einem Innendurchmesser der Oberfläche 19 des Implantates 10 von 2.1mm jeweils eine Nocken- bzw. Nutenbreite von ca. 0.7mm auf.

Figur 7 zeigt im Schnitt ein in das Implantat 10 eingesetztes Abutment 110, welches mit einer Abutmentschraube 111 im Gewindeabschnitt 11 des Implantates 10 befestigt ist. Die Indexierungsabschnitte 18, 118 von Implantat 10 und Abutment 110 stehen miteinander in Eingriff, sodass eine Rotationssicherung erzeugt wird. Aufgrund der engen Tolerierung der Oberfläche 19, 119 ist das Abutment 110 im Implantat 10 geführt und dadurch an seinem zervikalen Ende 116 präzise gehalten. Die Konusflächen 117 des Abutments 110 bzw. 17 des Implantates 10 sind so toleriert, dass in jedem Fall ein Kontakt zwischen den Konusflächen 17, 117 im Bereich des koronalen Endes 16 des Implantates erfolgt. Damit ist eine Abstützung des Abutments 110 im Implantat 10 in zwei axial möglichst beabstandet von einander angeordneten Bereichen möglich. Die Abstützbereiche sind maximal beabstandet, sodass sich eine besonders grosse Stabilität ergibt. Gleichzeitig wird eine Spaltbildung zwischen dem Abutment 110 und dem Implantat 10 im Bereich des koronalen Endes 16 vermieden.

Im Bereich des Austritts des Abutments 110 aus dem Implantat 10 weist das Abutment einen Aussendurchmesser D11 auf, der im Wesentlichen den Innendurchmesser der Aufnahmeöffnung 15 des Implantates an seinem koronalen Ende 16 entspricht (siehe auch Figur 8). Wie Figur 8 weiter zeigt, ist die Stirnrand 14 des Implantates 10 vom Abutment 110 nicht bedeckt.

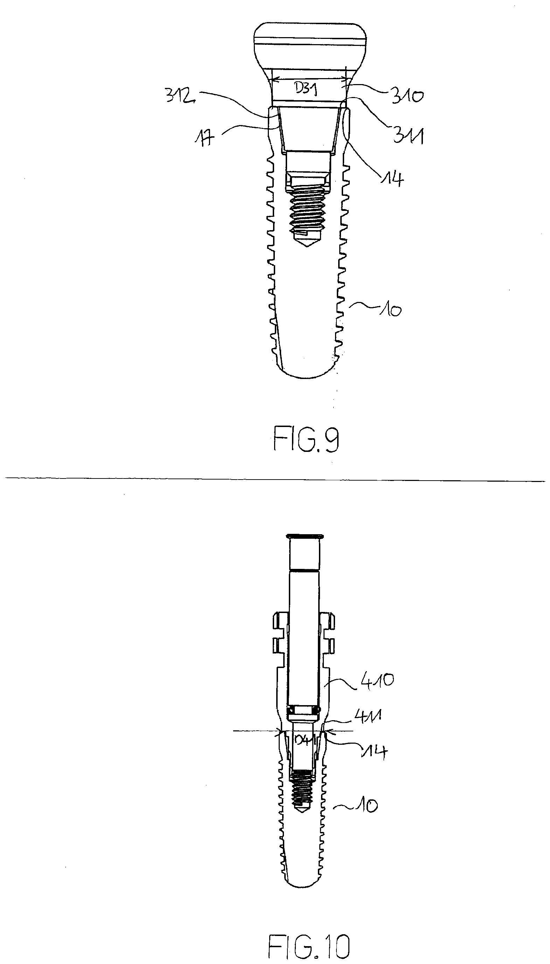

Figur 9 zeigt das Implantat 10 von Figur 1, in das ein als Gingiva-Former 310 ausgebildetes Hilfselement eingesetzt ist. Gingiva-Former sind dem Fachmann an sich bekannt. Der Gingiva-Former 310 ist so ausgebildet, dass in der Aufnahmeöffnung 15 des Implantates und insbesondere im Konusabschnitt 17 kein Kontakt zwischen dem Konusabschnitt 17 und dem Gingiva-Former 310 besteht. Stattdessen steht der Gingiva-Former mit einer Kontaktfläche 311 am Stirnrand 14 des Implantates 10 auf. Aufgrund des Konusspalts 312 zwischen der Konusfläche 17 des Implantates und dem Gingiva-Former werden Beschädigungen der Konusfläche 17 vermieden. Der Aussendurchmesser D31 des Gingiva-Formers im Bereich des Austritts aus dem Implantat 10, d.h. anschliessend an die Stirnrand 14 beträgt 3.5mm. Er ist also grösser ausgebildet als der Aussendurchmesser D11 von 3.05mm des Abutments an der entsprechenden Stelle (siehe Figuren 7 und 8).

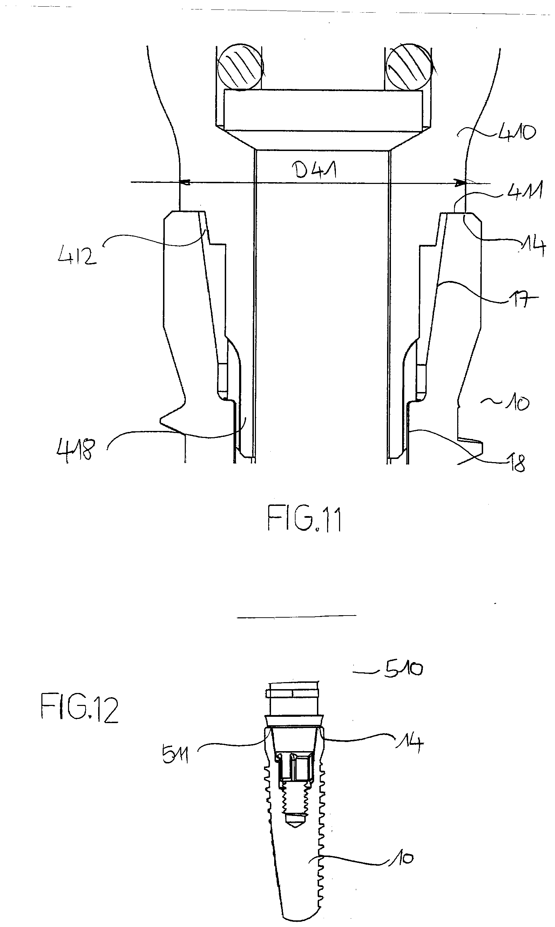

Figuren 10 und 11 zeigen das Implantat 10 aus Figur 1, in das ein als Abformelement 410 ausgebildetes Hilfselement eingesetzt ist.

Das Abformelement 410 weist eine Kontaktfläche 411 auf, welche in eingesetztem Zustand auf dem Stirnrand 14 des Implantates (siehe auch Figur 11) aufsteht. Das Abformelement 410 ist so ausgebildet, dass sich in eingesetztem Zustand ein Konusspalt 412 zwischen dem Abformelement und dem Konusabschnitt 17 des Implantates 10 bildet. Dadurch ist die axiale bzw. vertikale Lage des Abformelementes 410 bezogen auf das Implantat 10 durch den Kontakt zwischen der Kontaktfläche 411 und dem Stirnrand 14 genau definiert. Es gibt keine Höhenverschiebung aufgrund von Toleranzen in den Konuswinkeln und den Durchmessern.

Das Abformelement 410 weist im übrigen einen nicht weiter dargestellten Indexierungsabschnitt 418 auf, der im Wesentlichen gleich ausgebildet ist wie der Indexierungsabschnitt 118 des Abutments (siehe Figuren 4a, 4b).

Der Durchmesser D41 des Abformelements im Bereich des Austritts aus dem Implantat 10 ist grösser als der Durchmesser D11 des Abutments an der gleichen Stelle (siehe Figuren 7 und 8) ausgebildet und im Wesentlichen gleich gross oder etwas kleiner als der Aussendurchmesser D31 des Gingiva-Formers an der entsprechenden Stelle (siehe Figur 9).

Statt dem Implantat 10 und einem Abutment 110 wie in Figur 7 dargestellt, kann temporär das Implantat 10 auch mit einem Provisoriumsabutment 510 versorgt werden, welches die Konusfläche des Implantates 10 nicht berührt und welches am Stirnrand 14 des Implantates 10 anschlägt (siehe Fig.12).

Das Implantat 10 und das Abutment 110 sind in an sich bekannter Art und Weise hergestellt und ausgebildet. Typischerweise bestehen sie aus einem biokompatiblen Material wie Titan oder Keramik. Je nach zu ersetzendem Zahn sind die Implantate und Abutments unterschiedlich dimensioniert, sodass die vorstehend angegebenen Masse als beispielhaft zu betrachten sind. Bei grösseren oder kleineren Implantaten werden die entsprechenden Dimensionen gleichmässig reduziert oder vergrössert, sodass die Relationen zwischen den einzelnen Längen und Durchmessern im Wesentlichen unverändert bleiben.

Die Gesamtkonuswinkel bleiben unabhängig von der Implantatgrösse immer gleich, jedoch kann die Konuslänge bei unterschiedlichen Durchmessern variieren.

Exemplarisch sind die einzelnen Masse (in mm bzw. mm2) für Implantate mit den Durchmessern 3.3mm, 3.8mm (siehe auch vorstehende Beschreibung), 4.3mm und 5mm in der nachfolgenden Tabelle wieder gegeben.

| | | Implantatdurchmesser | | | |
|---|---|---|---|---|---|
| | | ø3.3 | ø3.8 | ø4.3 | ø5 |
| **Implantat:** | | | | | |
| Konuswinkel (ges.) | α | 15° | 15° | 15° | 15° |
| Konuslänge | k | 1,5 | 1, 9 | 1, 9 | 1, 9 |
| Konusdurchmesser gross | | 2, 8 | 3 | 3 | 3, 8 |
| Konusdurchmesser klein | | 2,4 | 2,5 | 2,5 | 3,3 |
| Länge zylindrischer Bereich | Z | 0,6 | 0,4 | 0,4 | 0,4 |
| Indexierungslänge | f | 1, 9 | 1,8 | 1,8 | 1,8 |
| Führungsfläche zwischen Nuten | d2 | 2 | 2,1 | 2,1 | 2,7 |
| Nutlänge | n | 1,55 | 1,35 | 1,35 | 1,35 |
| Nuttiefe | t | 0,17 | 0,18 | 0,18 | 0,27 |
| Nutenfläche | 21 | 0,26 | 0,24 | 0,24 | 0,36 |
| Nutendurchmesser | d1 | 2,35 | 2,45 | 2,45 | 3,25 |
| | | | | | |

| **Abutment:** | | | | | |
|---|---|---|---|---|---|
| Konuswinkel (ges.) | β | 15° | 15° | 15° | 15° |
| Konuslänge | K | 1,6 | 1, 9 | 1, 9 | 1, 9 |
| Konusdurchmesser gross | | 2, 85 | 3, 05 | 3, 05 | 3,85 |
| Konusdurchmesser klein | | 2,42 | 2,56 | 2,56 | 3,36 |
| Nockenlänge | N | 1,7 | 1,55 | 1,55 | 1,55 |
| Nockentiefe | T | 0,16 | 0,15 | 0,15 | 0,24 |
| Nockenfläche (ohne Hinterstich) | 121 | 0,27 | 0,23 | 0,23 | 0,37 |
| Nockenaussendurchmesser | D1 | 2,3 | 2,4 | 2,4 | 3,2 |
| Führungs-ø zwischen Nocken | D2/ 121 | 2 | 2,1 | 2,1 | 2,7 |
| Nockenbreite | | 0,5 | 0,7 | 0,7 | 0,7 |
| Indexierungslänge | F | 2,1 | 1, 95 | 1, 95 | 1, 95 |
| Gewinde für Demontage-Tool | | M1.8 | M1.8 | M1.8 | M2.3 |
| Durchmesser Gingiva-Former | D31 | 3 | 3,5 | 3,75 | 4,45 |
| Durchmesser Abformelement | D41 | 3 | 3,5 | 3,75 | 4,45 |

## Patentansprüche

1. Zahnimplantat (10) zum Einsetzen in einen Kieferknochen, mit einer am koronalen Ende (16) des Implantats angeordneten Aufnahmeöffnung (15) für ein Abutment (110),
wobei die Aufnahmeöffnung (15) vom koronalen Ende (16) her gesehen einen Konusabschnitt (17) mit einer Konuslänge (k) und einen Indexierungsabschnitt (18) mit einer Indexierungslänge (f) aufweist,
wobei die Indexierungslänge (f) mindestens 90% der Konuslänge (k), insbesondere mehr als 1.6mm, beträgt, wobei der Indexierungsabschnitt (18) eine Oberfläche (19) aufweist, in der wenigstens eine sich in radialer Richtung nach aussen erstreckende Nut (20) mit einer Nutlänge (n) angeordnet ist, die mit einem Nocken (120) eines Abutments (110) in Eingriff bringbar ist, wobei die Oberfläche (19) wenigstens teilweise zylindrisch ist und so bemessen und toleriert ist, dass sie eine Führungsfläche für ein bestimmungsgemäss eingesetztes Abutment (110) bildet und dass zwischen dem Konusabschnitt (17) und dem Indexierungsabschnitt (18) eine umlaufende Plattformfläche (22) angeordnet ist, wobei sich die Nut (20) in axialer Richtung bis zur der Plattformfläche (22) erstreckt sodass beim Einsetzen des Abutments (110) eine Zwischenposition definiert wird **dadurch gekennzeichnet, dass** die Nutlänge (n) sich über mindestens 70% der Indexierungslänge (f) erstreckt und wobei in apikaler Richtung gesehen an den Indexierungsabschnitt (18) unmittelbar ein Gewindeabschnitt (11) zum Aufnehmen einer Abutmentschraube (111) anschliesst,
dadurch gekennzeichet, dass
der Konusabschnitt (17) einen Gesamtkonuswinkel (Alpha) von 10° bis 18° aufweist, und dass ein gegen das untere Ende des Implantates gerichteter Boden der Nut abgeschrägt ist.

2. Zahnimplantat nach Anspruch 1, **dadurch gekennzeichnet, dass** die Oberfläche (19) des Indexierungsabschnittes (18) einen Aussendurchmesser (d2) aufweist, der grösser als 80% des Nutaussendurchmessers (d1) ist.

3. Zahnimplantat nach einem der Ansprüche 1 bis 2, **dadurch gekennzeichnet, dass** die Nut (20) eine radial verlaufende Nutfläche (21) aufweist, die grösser ist als 0.22 mm2.

4. Zahnimplantat nach einem der Ansprüche 1 bis 3, **dadurch gekennzeichnet, dass** die Nutlänge (n) länger als 500 % der Nuttiefe (t) ist.

5. Zahnimplantat nach einem der Ansprüche 1 bis 4, **dadurch gekennzeichnet**, die Nut (20) einen Aussendurchmesser (d1) ausweist, der kleiner oder gleich ist, als der kleinste Durchmesser des Konusabschnittes (17).

6. Zahnimplantat nach einem der Ansprüche 1 bis 5, **dadurch gekennzeichnet, dass** zwischen dem Indexierungsabschnitt (18) und dem Konusabschnitt (17) ein zylindrischer Abschnitt (23) angeordnet ist.

7. Implantations-Set mit wenigstens einem Implantat nach einem der Ansprüche 1 bis 6, mit einem am koronalen Ende (16) des Implantates (10) angeordneten Aufnahmeöffnung für ein Abutment (110), wobei die Aufnahmeöffnung (15) benachbart zum koronalen Ende (16) einen Implantatkonusabschnitt (17) aufweist, und
mit wenigstens einem Abutment (110 welches in die Aufnahmeöffnung (15) des Implantates (10) einsetzbar ist und welches einen Abutmentkonusabschnitt (117) aufweist, der mit dem Implantatkonusabschnitt (17) in Eingriff bringbar ist und
mit wenigstens einem Hilfselement, insbesondere ausgewählt aus der Gruppe Verschlussschraube, Gingiva-Former (310), Provisoriumsabutment (510), Abformelement (410),
**dadurch gekennzeichnet, dass** das Hilfselement (310, 410, 510) derart ausgebildet ist, dass es in eingesetztem Zustand die Implantatkonusfläche (17) nicht berührt und eine Kontaktfläche (311, 411, 511) aufweist, mit welcher es auf einem Stirnrand (14) des Implantats (10) aufliegt.

8. Implantations-Set nach Anspruch 7, **dadurch gekennzeichnet, dass** das Hilfselement im Bereich seiner Kontaktfläche (311, 411) einen Aussendurchmesser (D31, D41) aufweist, der grösser ist als der Aussendurchmesser (D11) im Bereich des Abutments (110), der in eingesetztem Zustand benachbart zum Stirnrand (14) des Implantates (10) liegt.

9. Implantations-Set nach Anspruch 8, **dadurch gekennzeichnet, dass** der Aussendurchmesser (D31) im Bereich des Stirnrandes (14) eines als Gingiva-Former (310) ausgebildeten Hilfselements grösser ist als der Aussendurchmesser (D41) eines als Abformelements (410) ausgebildeten Hilfselements im Bereich des Stirnrandes (14).

## Claims

1. Dental implant (10) for insertion into a jaw bone, with a receiving opening (15) for an abutment (110) arranged at the coronal end (16) of the implant,
wherein the receiving opening (15), as viewed from the coronal end (16), has a cone section (17) with a cone length (k) and an indexing section (18) with an indexing length (f),
wherein the indexing length (f) is at least 90% of the cone length (k), in particular more than 1.6mm, wherein the indexing section (18) has a surface (19) in which at least one groove (20) having a groove length (n) and extending outward in the radial direction is arranged, engageable with a cam (120) of an abutment (110), wherein the surface (19) is at least partially cylindrical and is sized and toleranced to form a guide surface for an abutment (110) inserted as intended, and in that a circumferential platform surface (22) is disposed between the cone section (17) and the indexing section (18), wherein the groove (20) extends in axial direction up to the platform surface (22) so that an intermediate position is defined when inserting the abutment (110), **characterized in that** the groove length (n) extends over at least 70% of the indexing length (f) and wherein, viewed in the apical direction, a threaded section (11) for receiving an abutment screw (111) directly adjoins the indexing section (18), **characterized in that** the cone section (17) has an overall cone angle (alpha) of 10° to 18°, and **in that** a bottom of the groove directed towards the lower end of the implant is chamfered.

2. Zahnimplantat nach Anspruch 1, **dadurch gekennzeichnet, dass** die Oberfläche (19) des Indexierungsabschnittes (18) einen Aussendurchmesser (d2) aufweist, der grösser als 80% des Nutaussendurchmessers (d1) ist.

3. Dental implant according to any one of claims 1 to 2, **characterized in that** the groove (20) has a radially extending groove area (21) that is larger than 0.22 mm2.

4. Dental implant according to any one of claims 1 to 3, **characterized in that** the groove length (n) is longer than 500% of the groove depth (t)..

5. Dental implant according to one of the claims 1 to 4, **characterized in that** the groove (20) has an outer diameter (d1) which is smaller than or equal to the smallest diameter of the cone section (17)..

6. Dental implant according to one of claims 1 to 5, **characterized in that** a cylindrical section (23) is arranged between the indexing section (18) and the cone section (17).

7. An implantation set comprising at least one implant according to any one of claims 1 to 6, having a receiving opening for an abutment (110) disposed at the coronal end (16) of the implant (10), the receiving opening (15) having an implant cone portion (17) adjacent the coronal end (16), and with at least one abutment (110) which is insertable into the receiving opening (15) of the implant (10) and which has an abutment cone portion (117) engageable with the implant cone portion (17); and
with at least one auxiliary element, in particular selected from the group of cover screw, gingiva former (310), temporary abutment (510), impression element (410),
**characterized in that** the auxiliary element (310, 410, 510) is designed in such a way that, in the inserted state, it does not touch the implant cone surface (17) and has a contact surface (311, 411, 511) with which it rests on a front edge (14) of the implant (10).

8. Implantation set according to claim 7, **characterized in that** the auxiliary element has an outer diameter (D31, D41) in the region of its contact surface (311, 411) which is larger than the outer diameter (D11) in the region of the abutment (110) which lies adjacent to the front edge (14) of the implant (10) in the inserted state.

9. Implantation set according to claim 8, **characterized in that** the outer diameter (D31) in the region of the front edge (14) of an auxiliary element designed as a gingiva former (310) is larger than the outer diameter (D41) of an auxiliary element designed as an impression element (410) in the region of the front edge (14).

## Revendications

1. Implant dentaire (10) destiné à être inséré dans un os de la mâchoire,
avec une ouverture de réception (15) pour un abutment (110) disposée à l'extrémité coronale (16) de l'implant, l'ouverture de réception (15) présentant, vue depuis l'extrémité coronale (16), une section cônique (17) avec une longueur de cône (k) et une section à indexation (18) avec une longueur d'indexation (f),
la longueur d'indexation (f) représentant au moins 90% de la longueur de cône (k), en particulier plus de 1,6mm, la section à indexation (18) présentant une surface (19) dans laquelle est disposée au moins une fente (20) s'étendant vers l'extérieur dans la direction radiale avec une longueur de fente (n), qui peut être mise en prise avec une section came (120) d'un abutment (110), la surface (19) étant au moins partiellement cylindrique et étant dimensionnée et tolérée de telle sorte qu'elle forme une surface de guidage pour un abutment (110) mis en place conformément à sa destination, et en ce qu'une surface de plate-forme périphérique (22) est disposée entre la section cônique (17) et la section d'indexation (18),la fente (20) s'étendant dans la direction axiale jusqu'à la surface de la plate-forme (22), de sorte qu'une position intermédiaire est définie lors de l'insertion de l'abutment (110), **caractérisé en ce que** la fente (20) s'étend jusqu'à la surface de la plate-forme (22), **en ce que** la longueur de la fente (n) s'étend sur au moins 70% de la longueur d'indexation (f) et, vu dans la direction apicale, une section cônique (11) destinée à recevoir une vis d'abutment (111) se raccordant directement à la section d'indexation (18), **caractérisé en ce que** la section cônique (17) présente un angle total de cône (alpha) de 10° à 18°, et **en ce qu'**un fond de la fente orienté vers l'extrémité inférieure de l'implant est biseauté.

2. Implant dentaire selon la revendication 1, **caractérisé en ce que** la surface (19) de la section à indexation (18) présente un diamètre extérieur (d2) qui est supérieur à 80% du diamètre extérieur de la fente (d1)..

3. Implant dentaire selon l'une des revendications 1 à 2, **caractérisé en ce que** la fente (20) présente une surface de fente (21) s'étendant radialement, qui est supérieure à 0,22 mm2..

4. Implant dentaire selon l'une des revendications 1 à 3, **caractérisé en ce que** la longueur de la fente (n) est supérieure à 500 % de la profondeur de la fente (t)..

5. Implant dentaire selon l'une des revendications 1 à 4, **caractérisé en ce que** la fente (20) présente un diamètre extérieur (d1) qui est inférieur ou égal au plus petit diamètre de la section cônique (17).

6. Implant dentaire selon l'une des revendications 1 à 5, **caractérisé en ce qu'**une section cylindrique (23) est disposée entre la section à indexation (18) et la section cônique (17)..

7. Kit d'implantation avec au moins un implant selon l'une des revendications 1 à 6, avec une ouverture de réception pour un abutment (110) disposée à l'extrémité coronale (16) de l'implant (10), l'ouverture de réception (15) présentant une section de cône d'implant (17) adjacente à l'extrémité coronale (16), et
avec au moins un abutment (110) qui peut être inséré dans l'ouverture de réception (15) de l'implant (10) et qui présente une section cônique de l'abutment (117) qui peut être mise en prise avec la section cônique de l'implant (17) et avec au moins un élément auxiliaire, en particulier choisi dans le groupe vis de fermeture, formeur gingival (310), abutment provisoire (510), élément de prise d'empreinte (410),
**caractérisé en ce que** l'élément auxiliaire (310, 410, 510) est conçu de telle sorte qu'à l'état inséré, il ne touche pas la surface conique de l'implant (17) et présente une surface de contact (311, 411, 511) avec laquelle il repose sur un bord frontal (14) de l'implant (10)..

8. Kit d'implantation selon la revendication 7, **caractérisé en ce que** l'élément auxiliaire présente, dans la zone de sa surface de contact (311, 411), un diamètre extérieur (D31, D41) qui est plus grand que le diamètre extérieur (D11) dans la zone de l'abutment (110) qui, à l'état inséré, est voisin du bord frontal (14) de l'implant (10).

9. Kit d'implantation selon la revendication 8, **caractérisé en ce que** le diamètre extérieur (D31) dans la zone du bord frontal (14) d'un élément auxiliaire conçu comme un conformateur de gencive (310) est plus grand que le diamètre extérieur (D41) d'un élément auxiliaire conçu comme un élément de moulage (410) dans la zone du bord frontal (14) .
